# EUROPEAN PATENT APPLICATION

(11) **EP 0 570 952 A2**
(43) Date of publication of application: **24.11.1993**
(21) Application number: 93108194.7
(22) Date of filing: 19.05.1993
(51) Int. Cl.: G06F 15/80, G06F 15/16

(54) **Slide network for an array processor**

(30) Priority: 22.05.1992 US 887456
(71) Applicant: INTERNATIONAL BUSINESS MACHINES CORPORATION, Armonk, N.Y. 10504 (US)
(72) Inventor: Wilkinson, Paul Amba, Apalachin, New York 13732 (US); Barker, Thomas Norman, Vestal, New York 13850 (US); Dieffenderfer, James Warren, Owego, New York 13827 (US); Kogge, Peter Michael, Endicott, New York 13760 (US)
(74) Representative: Schäfer, Wolfgang, Dipl.-Ing.

(57) **Abstract**

In arrays of processors, especially linear arrays, it is important to be able to communicate to adjacent neighbors (en masse). That is, each element of the array can communicate with its neighbor on the left simultaneously. In addition, the array processor is provided with the ability for selected elements of the array, picket processing elements, to simultaneously communicate with other elements that are further away in one dimension than the nearest neighbor in one transfer cycle. This is accomplished by causing intermediate elements to become transparent in the communication paths, thus allowing data to "slide" through intermediate nodes to the destination node. This system can be used in the implementation of fault tolerance in the array of elements.

## Description

These invention relate to computers and computer systems and particularly to arrays of processors and more particularly to a slide network for array processors enabling passing information from one processing element which slides past intermediate processing elements in the network to reach a destination processing element that may not be a neighbor. The network data path in our preferred embodiment is parallel, not a bit-serial data path.

In the never ending quest for faster computers, engineers are linking hundreds, and even thousands of low cost microprocessors together in parallel to create super super-computers that divide in order to conquer complex problems that stump today's machines. Such machines are called massively parallel. We have created a new way to create massively parallel systems. The many improvements which we have made should be considered against the background of many works of others. System trade-offs are required to pick the architecture which best suits a particular application but no single solution has been satisfactory. Our ideas make it easier to provide a solution.

Communication among processing elements in an array of processors is probably the most time consuming part of array problems. Solutions for solving have resulted in many communication architectures.

A simple controller directed mesh provides paths and control so that each element communicates in a NEWS network to neighbors on the North, East, West, and South. Such NEWS networks are popular on SIMD machines used for regular array processing, as with images.

Another traditional communication network solution is the binary N-cube. This network requires a smart router at each node that can examine the header information in a message and decide the appropriate disposition of the message. Application of this approach has typically been in MIMD arrays; however, some SIMD arrays have included the binary N-Cube network routers.

There is a need in SIMD and related processing to isolate processing from communication. This has not had a suitable solution for byte-wide data streams. The other possibilities, including those which might be suggested by the art discussed here, use too much silicon.

We note that the term "slide" has been used before in the art to describe a mass movement of information to a nearest neighbor only. U.S. Patent 4,380,046 of Frosch, entitled "Massively Parallel Processor Computer," uses the word "slide" in a manner which is not related to our implementation of a structure to which we believe the term should be applied. Instead, U.S. Patent 4,380,046 relates to a large array of bit slice processors suitable for space borne processing of image data. This 1979 patent fully describes a state of the art SIMD processor to the logic elements needed to implement the array and refers to the packaging of four processing elements on a single chip.

The term "sliding" in U.S. Patent 4,380,046 is used in reference to moving data to neighboring processing elements. In FIGURE 2 of this patent reference is made to a logic-slider subunit. FIGURE 11 and FIGURE 12 of this patent reference an S-REGISTR (SLIDE COMMAND). There are several other references to the term slide in the patent. In Patent 4,380,046, the term "slide" refers to the movement of an entire image in one direction for one pixel position. Thus, every processing element takes from its top a pixel of data from the processing element to move the image down one row of pixels. In spite of similarities of problems, this patent does not address problems which are associated with a parallel data path; but, like the SIMD machines in the art, Patent 4,380,046 instead describes a serial data path.

As will be seen, we use the term "slide" to describe the action in a multibyte-wide parallel data stream situation of passing a piece of information from one picket sliding past intermediate pickets to the destination picket that may not be a neighbor at all. Frosch's patented device has a different use, and the patented device is used to refer to mass movement to nearest neighbor only.

U.S. Patent 4,523,273 of Adams, entitled "Extra Stage Cube," describes an array of computers and a data routing system between them. Apparently, each processor has a data switching box. Each data switching box has four (two input and two output) ports with connectivity to each input to either or both outputs. An additional column of switching boxes is included at the input edge of the resulting array to provide fault tolerance to the generalized cube connected network. While one of the features achieved by our invention provides a desirable fault tolerance in an array of elements, Adams describes a fault tolerant implementation of the generalized cube interconnection structure for an array of processors. This structure is much more complex than the interconnect structure that we believe is appropriate.

U.S. Patent 4,621,339 of Wagner, relates to "SIMD Machine using Cube Connected Cycles Network Architecture for Vector Processing," taking a SIMD 2-d routing network and implementing it so that it is cube connected and has communication between distant elements in the array to provide an environment where more "interesting" problems can be hosted on a machine with a SIMD organization. Processing elements and data paths are 1-bit wide. The structure has no suggestion of the desirability of a slide structure or the use of multiple byte-wide pickets with connection registers capable of allowing data to slide through them.

U.S. Patent 4,858,110 of Miyata, entitled "Parallel Data Processor with Shift Register Inter-processor Transfer, "illustrates inter-processing communication as conceived by Miyata for a conventional SIMD machine. Patent 4,858,110 implements a communication "Shift Register" with two clocks to improve performance by overlapping processing within the PE with communication between PEs in the 2-d mesh. The first clock on the shift register is used by the PE to shift it. The second clock is used for inter-PE communication. Instead of providing something like our invention, Patent 4,858,110 uses the shift register for communication between processing elements. This art shows other attempts to provide inter-processing element communication in SIMD machines, but there is a need to isolate processing from communication. These prior solutions in a byte-wide parallel data stream architecture using pickets would use too much silicon.

Our improvements which achieve communication between elements in a linear or multi-dimensional array processor, such as may have byte-wide parallel data streams with minimal hardware at each node, provide our system with the ability to circumvent certain problems associated with inactive or disabled elements and support communication across more than one element of the array in a single transfer cycle. Our invention enables multiple byte-wide pickets which are provided with connection registers capable of allowing data to slide through them to support interprocessor element communication with minimal hardware and silicon while isolating processing and communication functions.

As a result of our invention we have provided:
a slide bus structure; a picket addressing organization that
(a) supports dozing pickets, and
(b) controls of communication using the slide bus.

The arrangement provides a way for each picket of an array processor to communicate with a neighbor to the left or with a neighbor to the right. The approach has applicability for linear and higher order arrays.

In arrays of processors, especially linear arrays, it is important to be able to communicate to adjacent neighbors (en masse) so that each element of the array communicates with its neighbor, e.g. the left, simultaneously. However, in addition, our invention provides system ability for selected elements of the array to simultaneously communicate with other elements that are further away in a dimension other than nearest neighbor in one transfer cycle. This is accomplished by causing intermediate elements to become transparent in the communication paths, thus allowing data to "slide" through intermediate nodes to the destination node. This invention can also be significant in the implementation of fault tolerance in the array of processing elements of an array processor.

We have created a new way to make massively parallel processors and other computer systems by creating a new "chip" and systems designed with our new concepts. This application is directed to such systems.

It may be interesting to note that the picket processor can employ a PME. A picket processor may be especially useful in military application where a very compact array processor is desirable. In this connection, a picket processor differs somewhat from the APAP, our Advanced Parallel Array Processor. However, the commonality exists, and aspects and features which we have provided can be employed in differing machines.

The term picket refers to 1/nth element of an array processor made up of processor and memory and their included communication elements applicable for array inter-communication.

The picket concept is also applicable to the 1/nth of an APAP processing array.

While the picket concept can differ from an APAP in data width, memory size, and number of registers, it is, in the massively parallel embodiment which is an alternative to an APAP, different in that it is configured to have connectivity for 1/nth of a regular array, while a PME in an APAP is a part of a sub-array. Both systems can execute SIMIMD. However, because a picket processor is configured as a SIMD machine with MIMD in the PE, it can directly execute SIMIMD, while a MIMD APAP configuration would execute SIMIMD by using MIMD PEs controlled to emulate SIMD. Both machines use a PME.

Both systems can be configured as a parallel array processor, comprising an array processing unit for the array having 'N' elements interconnected with an array communication network wherein 1/Nth of the processor array is a processing element, it's associated memory, a control bus interface, and a portion of the array communication network.

The parallel array processor has a dual operation mode capability wherein the processing unit can be commanded to operate in either or two modes, and freely move between these two modes for SIMD and MIMD operation, where when SIMD is the mode of its organization a processing unit has the ability to command each element to execute it's own instructions in a SIMIMD mode, and where when MIMD is the implementation mode for the processing units organization it has the ability to synchronize selected elements of the array to simulate MIMD execution. We can call this MIMD-SIMD).

A parallel array processor in both systems provides an array communication network with paths for the passing of information between elements of the array. The movement of information can be direction by either of two ways, where as a first way, an array controller directs that all messages move in the same direction at the same time such that the data being moved does not define its destination, and in a second way, each message is self routed with a header at the beginning of a message defining its destination.

A segment of the parallel array processor array has plural copies of the processing unit is provided on a single semiconductor chip, which each copy segment of the array including a portion of the array communication network associated with that segment and buffers, drivers, multiplexers, and control for enabling the segment portion of the array to be seamlessly connected with other segments of the array to extend the array communication network.

The control bus or path from a controller is provided for each processing unit so that the control bus extends to each of the elements of the array and controls its activities.

Each processing element segment of the parallel array, contains plural copies of a processor memory element, which is contained within the limits of a single semiconductor chip, has a segment of the array includes a portion of the array control bus and the register buffers to support the communication of controls to the array segment contained within the chip.

Both can implement mesh moves or routed moves. Normally, the APAP implements a dual interconnect structure, with eight elements on the chip interrelating in one way, while the chips interrelate in another way. The programmable routing on the chip generally causes links to be established between the PMEs as we have described, but the nodes can be and normally are related in another way. On the chip essentially the normal APAP configuration would be a 2x4 mesh, which the node interconnection can be a routed sparse octal N-cube. Both systems have inter-PE intercommunication pathways between PEs (PMEs) enabling a matrix to be made up of point-to-point paths.

With this background and perspective, we will describe in detail features and aspects of our invention related to the preferred embodiment of our invention with reference to the FIGURES.

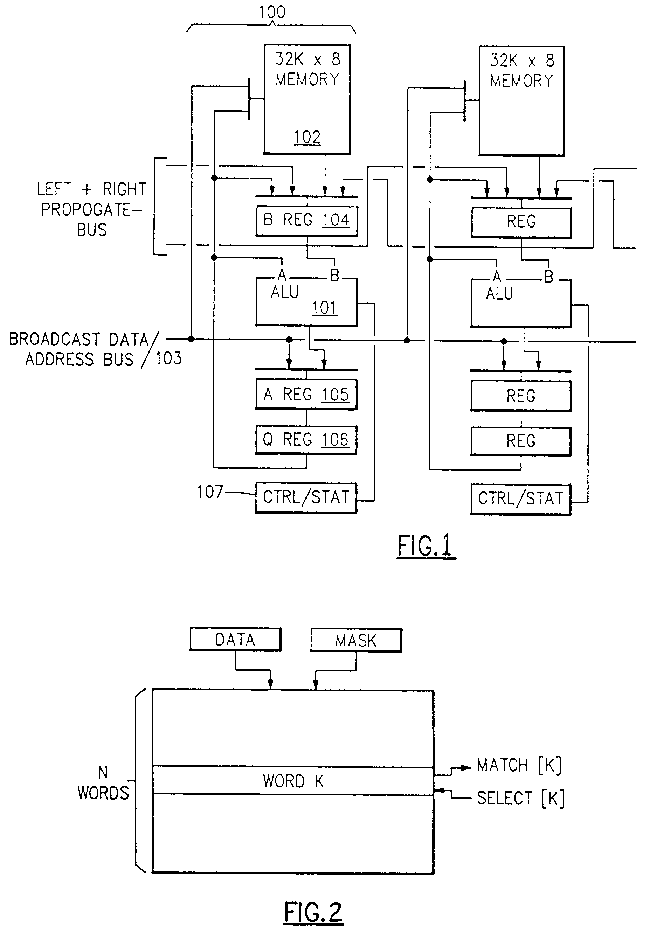

FIGURE 1 illustrates a pair of the basic picket units which are configured on a silicon base with processor, memory, control logic and associative memory with byte communication with the other pickets in the array.

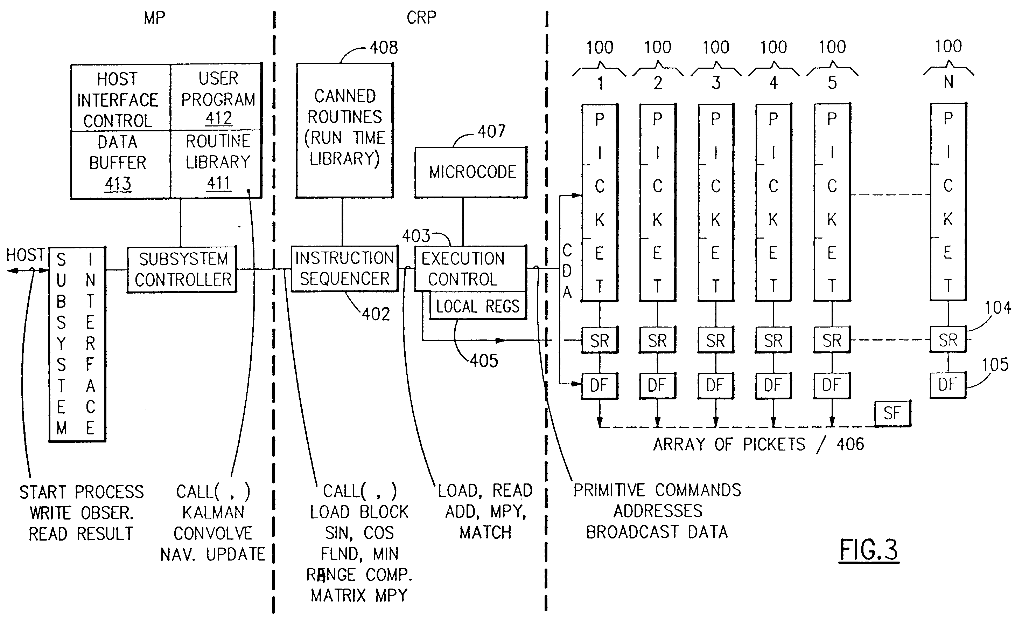

FIGURE 2 illustrates associative memory processing.

FIGURE 3 illustrates a basic 16 (n) picket configuration for a SIMD subsystem which employs a microprocessor controller, a hardwired sequencing controller for canned routines, and a picket array and which forms the basic parallel picket processor system which may also be a stand alone unit.

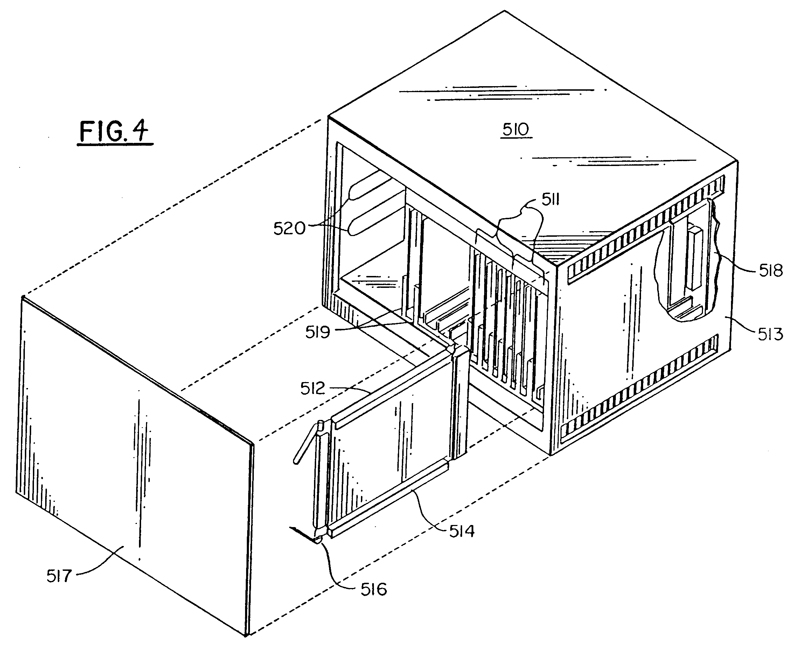

FIGURE 4 illustrates a multiple picket processor system which incorporates a plurality of picket processors of FIGURE 3.

FIGURE 5 is a subsystem functional block diagram.

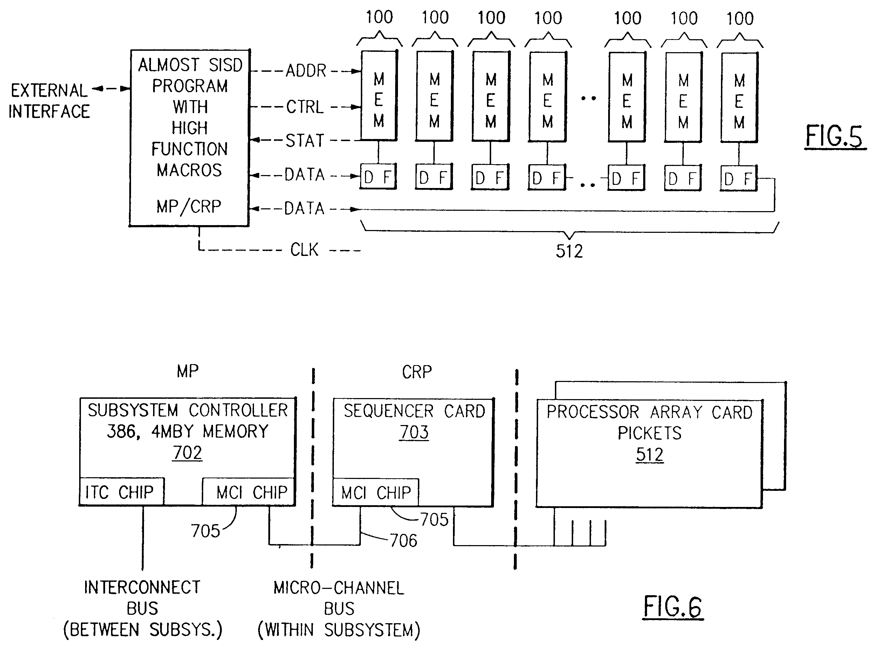

FIGURE 6 further illustrates a subsystem controller's arrangement with the cards of FIGURE 4.

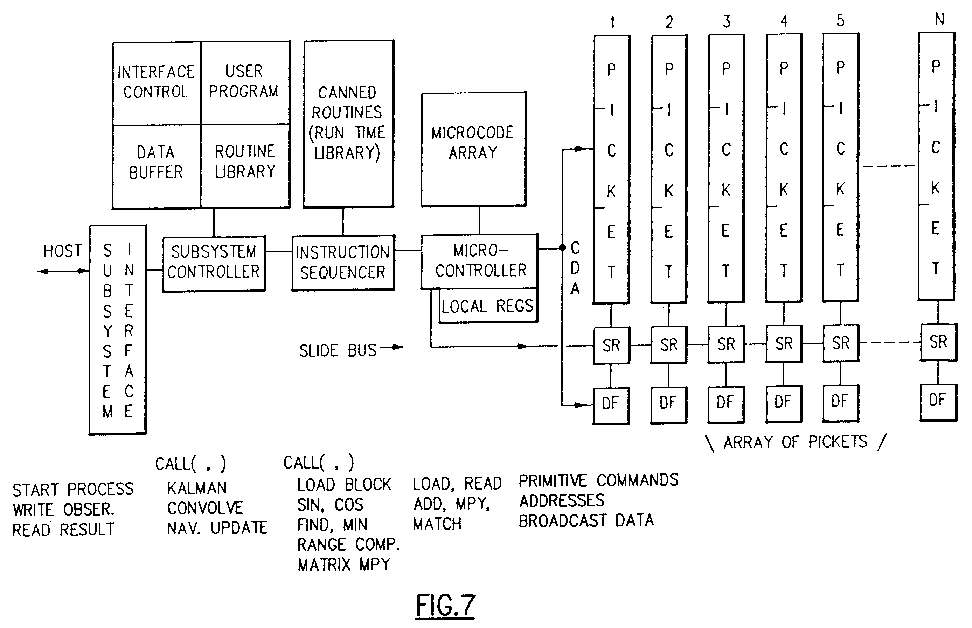

FIGURE 7 is an array block diagram which shows a set of pickets with the interconnecting slide bus in accordance with our preferred embodiment for a slide network suitable for an array processor as exemplified by FIGURES 1-6.

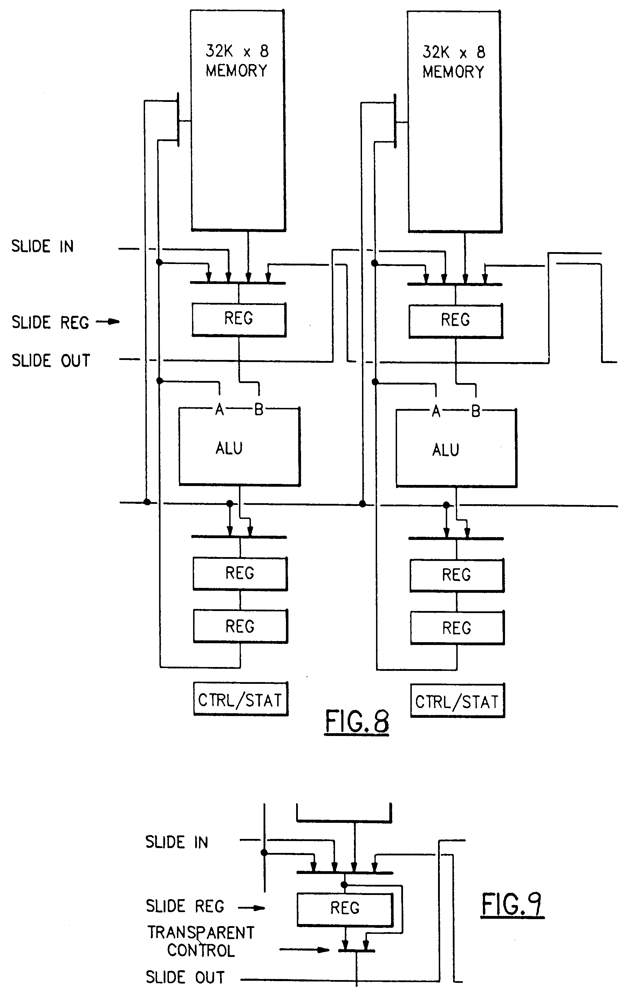

FIGURE 8 shows a picket in a diagram of our preferred embodiment of the logic within one picket and its neighbor.

FIGURE 9 illustrates the transparent latch which is provided for the array processor of our preferred system, which focuses on the slide register and an embodiment of transparency.

For passing data between pickets as illustrated by FIGURES 1-6 an arrangement with each picket having the ability to communicate with the neighbor on the left or with the neighbor on the right has been provided. The present preferred embodiment is applicable to this configuration. The approach can be applied to 2-dimensional and higher order arrays.

FIGURE 1 illustrates the basic picket unit 100, comprising a combined processing element ALU 101 with a local memory 102 coupled to the processing element for processing one byte of information in a clock cycle. As illustrated, the picket unit is formed on a silicon base chip or Picket Chip with a linear array of Pickets with neighbors to the side (to the left and right in the figure) such that on a silicon base chip there is formed a picket processing array with a plurality of local memories, one for each of the byte wide processing data flows arranged in a logical row or in a linear array with neighbor communication busses for passing data bidirectionally to the right and left. The collection of pickets in a Picket Chip is arranged in a geometric order, preferably horizontally on the chip. FIGURE 1 shows the typical implementation of two pickets of the picket array on a picket chip with multiple memory and data flow including communication paths between each picket's processing element and memory. The data communication paths between the one-on-one memory with the processing elements of the array is byte wide and across, left or right with a neighbor or with a "slide" for communication with picket processors farther away.

A "slide" may be defined as means for transferring information in a single cycle to a non-neighbor position through a picket address location which would normally be able to receive the information were it not transparent to the message being sent until it arrives and is received at the nearest active neighbor which receives it.

The access of the processing elements in our preferred embodiment is not bit serial in operation, but rather byte serial. Each processor has access to its own coupled memory, rather than having access to a block of local memory and an associated partition or page thereof. Instead of one bit, a character wide, or character multiples wide bus is provided. Instead of a bit, a byte (or in future systems envisioned to duplicate the performance of a character byte, multiple bytes) of information is processed in one clock cycle. Thus, 8, 16 or 32 bits may flow between each picket processing element to match the width of the associated memory. Each picket chip has 8 (9) bits wide memory of 32 Kbytes and preferably 16 pickets with this 32 Kbytes each of storage per picket node of the linear array. In our preferred embodiment, each associated memory is founded in CMOS as DRAM, and a character byte is 9 bits (which functions as an 8 bit character with self checking).

The parallel path byte wide bus data flow between pickets and between the processing element and its memory is a substantial improvement over the serial bit structure of the prior art systems, but it will also be recognized after this achievement is recognized that the increased parallelism results in additional problems which need solution as one grows into the understanding of the implications of the newly achieved architecture.

A feature which will be appreciated is that in addition to the left and right neighbor transfers, and the slide mechanism which we have described with reference to the drawings, we have provided also a broadcast bus which is double byte wide, so that all pickets can see the same data at the same time. Picket control and address propagation is also transferred on this broadcast bus. It is this bus that supplies the comparison data when performing set association operations, and other comparison or synchronous math operations.

The configuration of 32 KB per processing element applies far more memory logically available to each processing element than the traditional SIMD machine provides.

Pin count on the chip has been held low because the data which is passed into and out of the chip has been kept to a minimum. The DRAM memory is a conventional memory CMOS array and one that supports "row-column" access by deleting the column demultiplexing on the back of the memory array, and providing a row address that reads out a row of the memory array to the data flows in parallel.

As the storage array can contain commands, this allows one picket to do a different operation from another picket. On-chip control of individual pickets during operations involving most pickets, but not necessarily all, allows implementations which are unique for SIMD operations. One simple control function provided is that of suspended operations in any picket whose status output meets a specific condition. Thus a non-zero condition may mean a doze. Doze is a condition which suspends operations and turns the picket into an inactive but aware status. Another command provided is to inhibit or enable write to memory based on conditions in the picket, or based upon a command provided to the bus prior to a slide operation.

By applying to a picket chip 16 powerful pickets each with 32 KB memory, only 64 chips provides 1024 processors and associative memory of 32768 KB. The array of pickets comprises a set associative memory. The inventions are also useful for numerically intensive processing image analysis as well as vector processing. This powerful picket processing array can be packaged today on only 2 small cards! It will be seen that thousands of pickets can be appropriately packaged in a more portable low power package, enabling image processing applications to be performed with minimal delay or within video frame time, for instance, during the flight of an airborne craft without significant payload consideration.

The power of the pickets leads to the possibility of use of large associated memory systems packed into close quarters and enables the use of the processing power in a variety of applications after the systems designer becomes accustomed to use of the new system.

FIGURE 2 illustrates what might be termed fully associative memory in that, when an association is requested, a compare value is presented to all memory locations and all memory locations simultaneously respond with their match lines. Associative memory is known by itself in the art. In the system herein described, using parallel pickets of memory and processing elements which have byte transfers in order to perform a search, there is an input of data and a mask for a search in order to locate a word K among N words in memory. All matching pickets raise a status line, and then a separate operation reads or selects the first match K. This operation, commonly called set associative, can be repeated for successive words up thru the picket memory. Similarly, writing is achieved via a broadcast operation in which a raised select line indicates participation and broadcast data is copied to all selected pickets.

Another embodiment, although not the preferred one reduces the amount of DRAM memory available for each picket to allow inclusion of a section of fully associative memory of the type portrayed in FIGURE 2. If say 512 bytes of fully associative memory were included, then every picket could contain a set of search indexes and in a single operation, 512 times 1024 pickets yields 512k compares per operation or 512 Gig-compares per second at one microsecond per operation. With extensibility, the concept can be advanced into the multiple Tera-compare range. This embodiment empowers associative tasks that involve extensive searching for information with capabilities well in excess of computing capabilities today.

When this association operation using memory and byte wide coupled processing elements, as illustrated in FIGURE 1, in addition to the applications of distinct algorithms or operations, artificial intelligence, and parallel programming attempted in SIMD situations, there are many additional applications now available for the machine with the configuration of the chip we describe in a SIMD environment which may include:

Simple parallelizable arithmetic tasks, including matrix multiply and other tasks which can be performed in specialized memory machines;
Image matching, and image processing tasks which can be performed in Von Neumann machines but which can be speeded up considerably with the applications adaptable to the extreme parallelism, for instance pattern matching of a three dimensional image;
Data based query functions;
Pattern matching in the Artificial Intelligence arena;
Network control in bridges to rapidly identify messages that go to a user on the other side of a bridge of a network;
Gate level simulation;
and checkers for VLSI ground rules violations.

Process tasks which take advantage of the bank of memories and associated processing elements will occur to application programmers as they invent to take advantage of the power of the new system architecture.

A process of keeping a description of a digital system can be enhanced by the use of the array to one gate or logic element per picket 100. In such as system, the process would begin by assigning each gate description as a list of signals that the gate accepts as inputs and naming the signal it generates. Require that each time a signal changes, its name is broadcast on bus 103 to all pickets and is compared in parallel with the names of expected input signals. If a match is found, record in the picket a new value of the signal in a data flow register bit. When all signal changes have been recorded, cause all pickets to read out in parallel a control word which tells their data flow how to use the current set of inputs to compute the output. Cause these computations to be performed in parallel, with the results compared with the old value from the local gate. Record in a data flow status bit all of those gates of the pickets whose outputs change. Cause an external controller to interrogate all the pickets and ask for the next gate that changed. Then broadcast the appropriate signal name and value from the picket to all other pickets, as originally stated, and repeat the cycle until no more signal changes occur or the process is stopped.

Another process would be a dictionary name search. Names are stored in picket memory 102 such that the first letter of all names can be compared with that of the desired broadcast name on broadcast data address bus 103. All pickets without a match are turned off with the control characteristic we provide. Then the second letter is compared and the compare and turnoff procedure is repeated for successive letters (characters) until no active picket units remain or the end of the word has been reached. At this point the remaining picket units are queried, and the index of the desired data is read out by the sequencer.

FIGURE 3 illustrates a basic picket configuration of a plurality of parallel processors and memories, picket units, arranged in a row on a single silicon chip as part of a parallel array which may be configured as a SIMD sub-system, illustrating the control structure of such a system. Therein also is illustrated the control processor and the supervisory microprocessor. In FIGURE 3, there is illustrated memory and parallel processing element logic on the same chip which within the FIGURE 3 are shown in the section labeled Array of Pickets. Each memory is n bits wide, preferably a character wide, 8 (9) bits, as we have said, but conceptually also having a word width of multiple bytes wide memory. Thus, the memory portion of the parallel picket processor element will be preferably 8 (9) bits wide, or alternatively, 16, or 32 bits wide. With current CMOS foundry technology, we prefer to use an 8 bit or character wide associative memory (9 bit wide byte with self checking) with each picket processing element. The memories are directly associated one-on-one with a coupled processing element which includes an ALU, mask registers (A & Q used for masking), and a latch 104 (SP in FIG. 3), as well as status registers 107 and data flow registers A 105 and Q 106 (DF in FIG. 3) which are illustrated in greater detail in the Picket diagram of FIGURE 1. The DRAM and logic of each picket processor do not have any burden of an interconnection network to contend with, for there is a direct one-on-one association between the multi-bit wide DRAM memory and its processing element on the chip itself.

It will be noted in FIGURE 3 that the slide B register latch (SR) 104 is placed logically between the memory and the associated logic of the ALU of the processing element, and the latch becomes in essence a coupling port for each processing element along the picket array. Each picket chip comprises a plurality of parallel picket processing elements arranged in a line (which is illustrated as a straight bus) for communication with the picket control. A vector address bus is common to the memory, and a data vector address register controls what data passes across to each memory.

FIGURE 3 also illustrates the interconnection between the main or microprocessor card MP which in our preferred embodiment is a 386 microprocessor configured as a PS/2 system with a subsystem controller through which global instructions pass to a canned routine processor CRP which we have provided which provides the instructions for an instruction sequencer 402 and execution control 403 which executes the specific microcode called for by the instruction sequencer. This instruction sequencer might be analogized to a controller in function. However, also within the canned routine processor CRP we have provided local registers 405 which together with the local regs ALU (not shown) provide the basis for all addressing that is broadcast to all of the pickets within the picket array 406. In this way, address calculations are performed for all of the pickets in one ALU without using picket resources or conceivably without using picket execution cycles. This important addition adds control flexibility to the picket array, permitting doze, inhibit, and other control functions for specialized tasks to be performed and permitting pickets to be separated from any broadcast instruction or data function.

The instruction sequencer 402 with the loaded micro-code 407 broadcasts to the array of pickets for execution under the SIMD instruction sequence determined by the main program microprocessor MP and by the canned routines of the canned routine processor CRP run time library 408 to enable SIMD processing of data contained in the array of pickets.

The instructions provided to the microprocessor MP via the subsystem interface are conceived to be high level process commands that might include Start Process, Write Obser. and Read Result which are passed to the microprocessor by the Subsystem controller of the microprocessor MP. The microprocessor can be considered as the main system or control processor in the subsystem arrangement illustrated in Figures 3, 4, 5 and 6. It will be understood that this unit could also be a stand alone unit with the addition of a peripheral input device (not shown) such as a keyboard and display unit. In this stand alone configuration the system MP could be considered to be a commercial PS/2 to which cards which include the sequencer card (which configures the canned routine processor) and the processor array cards are inserted along the lines illustrated in FIGURE 6. The routine library 411 can contain routine sequences for overall control of a process, such as CALL ( , ); Kalman, Convolve, and Nav. Update. The selection of these routines is via the user program, and thus the overall processing can be under the control of an external host or under control of the user program 412 located in the MP. A data buffer 413 is provided in MP memory for data transfers into and out of the parallel picket processor system. The instruction 402 sequencer is configured to execute the control stream from the MP as well as the canned routines that reside in the canned routine run time library memory 408. Some of these routines include CALL ( , ), Load Block, Sin, Cos, Find, Min, Range Comp. and Matrix Multiply from canned routines provided by the canned routine runtime library 408.

Within the CRP is also microcode 407 for the execution control of lower level functions like Load, read, Add, Multiply, and Match functions.

We prefer and provide an external FOR/NEXT control for each processing unit. We also provide a deterministic floating point byte normalize implementation.

The use of a deterministic approach to macro development for the system, which we have provided, permits picket grouping and GROUP control. A local doze function is provided to accommodate individual picket processing variations.

Should the user program require execution by the array of processors, primitive commands, addresses and broadcast data is provided to the array of picket processors.

The particular function which each part of the system utilizes is determined by the task to be performed, and assigned during compilation of the user program.

FIGURE 4 represents a multiple parallel picket processor system 510 which incorporates a plurality of parallel picket processors. For applications such as multiple target tracing, sensor and data fusion, signal processing, artificial intelligence, satellite image processing, pattern/target recognition, Reed Solomon encode/decode operations, we have created a system which can be configured in a preferred embodiment as a SIMD system with 1024 parallel processors with two to 4 SEM E cards 511 (here represented as 4 cards per system) for each 1024 processors. The individual cards 512 are insertable in the rack mount system compartment 513 with wedgelock slides 514 and the cards are provided with insertion/extraction levers 516 so that when the cover 517 is closed it effectively encloses a mountable system in a rack with 32 or 64 M byte storage, with a performance capability of approximately 2 billion operations per second. The System is compact, and an array of a plurality of pickets is plugged into a backpanel board 518 which has logic thereupon which allows interconnection of a plurality of cards. The processor with 32 M byte storage is formed on 4 SEM E cards, and the system weighs only about 30 pounds. Power is provided by power supplies 519 as illustrated. Power requirements for the air cooled processor of such power is estimated to be only about 280 watts. Each SIMD system has two I/O ports 520 for channel adapter communication to associated mainframes or otherwise to the rest of the world. With the illustrated multiple parallel picket processor each consisting of 4 logic pages and using standard modular avionics packaging and bus structure for attachment to an external memory (e.g. PI, TM and IEEE 488 busses), the processor may attach via the I/O port to the memory bus of a mission processor and may be viewed as an extension of a mission processor memory space.

With the illustrated multiple parallel picket processor comprising 1024 parallel processing elements, each processor has 32kbytes of local memory and the associated path to the picket parallel processor is 8 bits or character wide (9bit) parallel.

Processors within each picket exchange data with other neighbor processors and between pages via a backplane interconnection network, preferably a crossbar, but alternatively a Slide Crossbar, a Shuffle Network, a Base 3 N-Cube or a Base 8 N-Cube.

Individual picket processors of the system are contained within a two card pack of the four cards, and the PS/2 microprocessor on one card, while the canned routine processor sequencer is contained on the other of the four cards which comprise the System schematically illustrated in FIGURES 5 and 6. Individual pickets 100, or cards of pickets 512 can be configured on the fly with the canned routine processor CRP to enter or can drop out of operations based on data conditions as controlled by the latch 104 architecture and the local registers 405 which are coupled to the execution control of the sequencer card CRP 703. Thus, picket processors can independently perform the alignment and normalization operations which are associated with floating point operations.

Processors are controlled in parallel by a common sequencer as described herein. The sequencer card 703 contains the controller CRP of the picket processor and may cause the picket process to execute a single thread of instructions, coded to execute on the array of SIMD processors in byte sequential fashion similar to classical bit serial processing as well. The controller has three layers. Micro-control for the pickets is microcoded similar to modern processors, and is transferred in parallel to all of the pickets. The Microcontrol and the Pickets are synchronized to the same clock system CLK, so that the functions controlled by the sequencer can be executed in the same clock time. Feeding commands to the micro-control sequencer is the function of the canned routine processor. This sequencer card 703 is a hardwired controller that during most functions executes loop control commands, and recursively starts new micro-control sequences. This controller with its canned routine library 408 and with its looping function keeps the pickets well fed, and not command bound. The canned routine processor controller CRP contains a large collection of macros that are called by the main system, which in the sub-system acts as a primary supervisory picket controller. This is the top control system of the picket array. It is a 386 microprocessors that manages the activity of the array of pickets. At a given moment all pickets of the array may execute the same instruction, although subsets of processors may react individually to the control flow.

There are several variations of the individual reactions, so that local autonomy, by virtue of the byte control function for each picket (dose, inhibit, etc.) there is local autonomy which programming may take advantage of and which may be made under control of the system during compilation of a program.

In addition, as has been described, there is local memory addressing autonomy. The SIMD controller sequencer supplies a common address for all of the pickets to use. Each picket can augment that address locally to enhance it's ability to do data dependent memory accesses.

In addition, a picket can participate or not participate in the array activities, depending on local conditions.

With this characteristic, it is now possible to introduce the concepts of groups to SIMD processing, by providing a means for each picket to assign itself to one or more of several groups, and processing can proceed based on these groupings, where a change of configuration can happen essentially on-the- fly. In one embodiment, only one group or combination of groups can be active at one time and each executes the same SIMD instruction stream. Some operations require only working with a subset or group of pickets. Programming can take advantage of this capability. Local participation autonomy is geared to work that way. Obviously, the more pickets that are computing the better.

One way to increase the number of pickets that are participating is to allow each picket to execute it's own instruction stream. This is essentially MIMD within SIMD. Now it is possible to essentially configure the same SIMD machine as a MIMD system or a machine of still a different configuration. This is because it is possible to program the picket to operate with it's own sequence of instructions.

Because each picket can be made to have its own sequence, decoding a very simple set of instructions at the picket level is possible and this allows more extensive local processing to take place. The areas where this function is most likely to find initial application is in complex decision making, however simple fixed point processing will be another area of interest to programmers.

A simple such program would load blocks of a picket program, say not to exceed 2K into picket memory 102, and these can be executed when the SIMD controller card 703 initiates local execution through the execution control beginning at a specified xyz address. This would be continued as the controller either counts off so many clocks, or tests for a task complete signal by monitoring the Status Funnel (SF) Registers illustrated in FIG. 3.

The status funnel (SF FIG. 3) makes use of the latch 104 for each picket. Each picket has a latch 104 which can be loaded to reflect the status condition of the picket. The SIMD controller can test the collective value in these latches (one per picket) by monitoring an array status line. This array status line is the logical combination of the values from each of the picket status latches.

So, the multiple parallel picket processors configuration can be configured in various manners, and as a SIMD processor. Such a SIMD machine in the preferred embodiment is programmed to execute a single thread of instructions in the classical manner, and coded to execute on the array of SIMD processors in sequential fashion similar to classical processors, under general control of a SIMD controller or sequencer. At the application level this is accomplished by vector and vector like instructions, and vectors can be processed within processors and across processor. Vector instructions can be added with macroinstructions, typically with 6 to 10 such instructions. The system will appear schematically as illustrated in the functional block diagram of the parallel processor subsystem illustrated in FIGURE 5. Through the I/O ports of the system as controlled by the host interface control 413 the subsystem sequencer functions similarly to a SIMD program with high function macros controlling the functions of the processing elements. Memory addressing enables an 8 bit, byte wide, data flow, and modulo8 arithmetic logic is used for functions (logical, add, multiply and divide). Provision is made for floating point format and for autonomous picket operation with individual sleep and dose mode and separate addressing.

The sub-system controller's arrangement is illustrated in FIGURE 6. Each of the processor array cards 512 (shown as 4 in this subsystem illustration, but capable of being reduced to 2 SEM E cards) are coupled to a sequencer CRP 703, which is coupled to a subsystem controller 702 which in turn is ported to either the main memory system or to another subsystem in the configuration via a chip 705 interface to the associated microchannel bus 706. In the preferred embodiment the subsystem controller is a general purpose microprocessor unit of the IBM Corporations PS/2 (a trademark of IBM) and employs an Intel 386 processing chip and 4 Mbytes memory. The personal computer microprocessor MP 702 is coupled to the sequencer's card via a microchannel type bus 705 706 within the subsystem.

Obviously, many modifications and variations of this invention are possible in light of these teachings, and it is therefore understood that the appended claims permit the invention to be practiced other than as specifically described.

The proposed implementation includes a multibyte-wide register in each picket as well as a multibyte-wide path to the left and to the right such that all pickets can transfer data to the neighbor on the left or right simultaneously. We call this mechanism the SLIDE BUS.

FIGURE 7 shows a set of pickets with the interconnecting slide bus and shows a typical implementation of an array of processing elements including control means and communication paths. The slide register (SR) in each picket can be made transparent such that when data is passed to the picket from the right and it is transparent, the data slides through the picket to the picket on the left in the same clock cycle.

FIGURE 8 shows our preferred embodiment of the logic within one picket and its two neighboring pickets, and the slide bus. Each picket has its slide register (REG), illustrated by the slide in, slide out communication via picket slide registers. The slide register provides input to the ALU of the picket. Thus FIGURE 8 shows, in more detail, two of the "pickets" shown in FIGURE 7. The slide register is shown between the memory block and the ALU block. Simple left/right communication can be extended past several intermediate pickets (transparent) to include point-to-point communication with pickets farther away than an immediate neighbor. FIGURE 9 shows the transparent control function where the control has an input from the slide register and an output to the ALU shown in FIGURE 8.

We will now address point-to-point communication between pickets where the slide bus, picket addressing which supports dozing picket, and the control of communication using the slide bus and slide registers are elaborated.

Simple left/right communication can be extended to include point-to-point communication with pickets farther away than an immediate neighbor. With appropriate controls, it is possible to support several non-overlapping point-to-point communications simultaneously.

### The Slide Bus Structure

FIGURE 8 shows the logic within one picket and its neighbors. The processing element or picket comprises a multibyte-wide parallel data flow, a significant amount of parallel memory (e.g. 32k-64k bytes), and a communication shift register or slide register.

A key feature of this register is its transparent mode. If picket number 3 is not a participant in a communication operation when picket 2 is passing information to picket 4, then picket 3 can be made transparent such that information that is placed on the slide bus by picket 2 would flow through picket 3 and be immediately available to be clocked into picket 4. This transparency feature can be applied to several successive pickets permitting slides over several pickets in one clock cycle.

Control of the slide bus comes from broadcast commands issued by the array controller called a subsystem controller or micro-controller. Each picket, however, has the ability to modify this command to accomplish the described communication operations. To this end, each picket can interpret the command to become a transmitter, receiver, terminating element, or other functions as commonly required in data transmission.

A key feature of our byte-wide approach to the SLIDE BUS is picket transparency. The register in the picket can be made to be transparent if the picket is not an active participant in the processing taking place. When the register is transparent, data that is transferred to the picket from the right is passed through the picket to the picket on the left, with no intervening clocks required.

The transparent mode is designed into the logic that makes up the latch. The concept can be visualized by considering that the register latch can be bypassed when transparent, as shown in FIGURE 9. For an efficient implementation, this bypass function in our preferred embodiment is integral with the latch. There are several such latch designs which are appropriate.

FIGURE 9 is used to enable visualization of a transparent latch. The slide bus is made transparent when the array controller has not activated the picket and loaded it with data or if the picket has been disabled. Also, the slide bus of a picket will be transparent if the picket is temporarily in DOZE mode and is not participating in the current processing.

The slide bus has the ability to handle the following functions:
SLIDE LEFT permits the SIMD controller to cause all active pickets to transfer data to the picket on the immediate left and to accept data from the picket on the immediate right.
SLIDE RIGHT permits the SIMD controller to cause all active pickets to transfer data to the picket on the immediate right and to accept data from the picket on the immediate left.
BROADCAST can be performed on the slide bus. All of the pickets are commanded to be transparent. Then, a data source inserts data at one end of the bus. The data then flows through the transparent bus to the other end such that all of the packets have access to the data. All active pickets then capture the data and transfer it into the picket for processing. Note that the propagation time through the bus must be accommodated by the controller. This delay includes the active circuit delay of a few gates in each of the pickets in the path.
The source of broadcast data can be the controller of the SIMD array, or it can be one of the pickets. It is particularly useful to have a "successful" picket update other pickets by broadcasting information and selectively capturing the information in interested pickets.
MULTI-PICKET MOVES can be performed on the slide bus by identifying the source picket and the destination picket and then causing all of the intervening segment of pickets to go transparent. Multiple transfers can be accomplished at the same time if the segments do not overlap.

The slide bus approach can be used to bypass faulty pickets by simply making the Slide Latch of the faulty picket transparent such that data will pass through it to the next active picket. This technique can apply to inactive pickets in addition to faulty ones.

### Control of the slide bus

Control of the slide function involves control of all activities during the clock time of the transfer. There are four functions to control:
Receive from the left bus, Receive from the right bus, Clock the latch (save the data), and Activate transparent mode.

These functions are combined into two controls within the picket. One indicates the direction of the transfer. This function comes from the array controller and is not modified by the picket. Thus, all of the transfers during one cycle are in the same direction. The second control indicates that the picket latches the data or passes it on. This is tied to the picket DOZE indicator in such a way that when the picket is active, the Slide Register captures the data, and when it is not active (DOZE) it passes the data on.

Moving the data between the Slide Latch and the picket Memory takes place in the clock cycle before or after the picket to picket communication cycle, and so are not considered here.

### Method of Identifying Pickets in an Environment with Failed Pickets

Much of the activity that takes place in a SIMD array is "array" activity, and there is no reason to be able to identify or isolate specific pickets. In fact, much of the control of activity within an array is by classes of content. One command might be "all pickets with a value larger than 360 - disable yourself."

But there are other times when information or activity must be directed at a specific picket. Another requirement for specific addressing is the need to pair off or otherwise group pickets into numerically determined sets. However, pickets can become active and then inactive in a fairly dynamic way, and of course, failures can occur.

To accommodate these requirements, there are two picket addressing schemes. The physical addressing scheme is determined at time of manufacture and is used by the controller to access a specific physical picket. A second numbering scheme is used to identify a logical picket address. The logical addresses that identify the active pickets in physical address order are stored in each picket memory at a specific memory address. Of course, the logical addresses must be adjusted each time a picket is added to or subtracted from the array.

To remove a picket from the middle of an array, we adjust the logical address of all pickets with larger picket addresses. The procedure for adjusting the logical addresses follows in steps 1-4 below:
1. Turn off all pickets with logical addresses less than the one being removed, using one command.
2. All other pickets pass their logical address to the next higher one with two commands. The controller updates its physical to logical address map some way.
3. Application dependent data movement occurs here if data must be linked to logical address.
4. Controller now disables the picket being removed using its physical address.

This simple, low overhead scheme is an important part of the control of a parallel SIMD array in our preferred embodiment.

### GLOSSARY OF TERMS

### ALU

### ALU is the arithmetic logic unit portion of a processor.

### Array

Array refers to an arrangement of elements in one or more dimensions. An array can include an ordered set of data items (array element) which in languages like Fortran are identified by a single name. In other languages such a name of an ordered set of data items refers to an ordered collection or set of data elements, all of which have identical attributes. A program array has dimensions specified, generally by a number or dimension attribute. The declarator of the array may also specify the size of each dimension of the array in some languages. In some languages, an array is an arrangement of elements in a table.
In a hardware sense, an array is a collection of structures (functional elements) which are generally identical in a massively parallel architecture. Array elements in data parallel computing are elements which can be assigned operations and when parallel can each independently and in parallel execute the operations required. Generally, arrays may be thought of as grids of processing elements. Sections of the array may be assigned sectional data, so that sectional data can be moved around in a regular grid pattern. However, data can be indexed or assigned to an arbitrary location in an array.

### Array Director

An Array Director is a unit programmed as a controller for an array. It performs the function of a master controller for a grouping of functional elements arranged in an array.

### Array Processor

There two principal types of array processors - multiple instruction multiple data (MIMD) and single instruction multiple data (SIMD). In a MIMD array processor, each processing element in the array executes its own unique instruction stream with its own data. In a SIMD array processor, each processing element in the array is restricted to the same instruction via a common instruction stream; however, the data associated with each processing element is unique. Our preferred array processor has other characteristics. We call it Advanced Parallel Array Processor, and use the acronym APAP.

### Asynchronous

Asynchronous is without a regular time relationship; the execution of a function is unpredictable with respect to the execution of other functions which occur without a regular or predictable time relationship to other function executions. In control situations, a controller will address a location to which control is passed when data is waiting for an idle element being addressed. This permits operations to remain in a sequence while they are out of time coincidence with any event.

### BOPS/GOPS

BOPS or GOPS are acronyms having the same meaning - billions of operations per second. See GOPS.

### Circuit Switched/Store Forward

These terms refer to two mechanisms for moving data packets through a network of nodes. Store Forward is a mechanism whereby a data packet is received by each intermediate node, stored into its memory, and then forwarded on towards its destination. Circuit Switch is a mechanism whereby an intermediate node is commanded to logically connect its input port to an output port such that data packets can pass directly through the node towards their destination, without entering the intermediate node's memory.

### Cluster

A cluster is a station (or functional unit) which consists of a control unit (cluster controller) and the hardware (which may be terminals, functional units, or virtual components) attached to it. Our Cluster includes an array of PMEs sometimes called a Node array. Usually a cluster has 512 PMEs. Our Entire PME node array consists of a set of clusters, each cluster supported by a cluster controller (CC).

### Cluster controller

A cluster controller is a device that controls input/output (I/O) operations for more than one device or functional unit connected to it. A cluster controller is usually controlled by a program stored and executed in the unit as it was in the IBM 3601 Finance Communication Controller, but it can be entirely controlled by hardware as it was in the IBM 3272 Control Unit.

### Cluster synchronizer

A cluster synchronizer is a functional unit which manages the operations of all or part of a cluster to maintain synchronous operation of the elements so that the functional units maintain a particular time relationship with the execution of a program.

### Controller

A controller is a device that directs the transmission of data and instructions over the links of an interconnection network; its operation is controlled by a program executed by a processor to which the controller is connected or by a program executed within the device.

### CMOS

CMOS is an acronym for Complementary Metal-Oxide Semiconductor technology. It is commonly used to manufacture dynamic random access memories (DRAMs). NMOS is another technology used to manufacture DRAMS. We prefer CMOS but the technology used to manufacture the APAP is not intended to limit the scope of the semiconductor technology which is employed.

### Dotting

Dotting refers to the joining of three or more leads by physically connecting them together. Most backpanel busses share this connection approach. The term relates to OR DOTS of times past but is used here to identify multiple data sources that can be combined onto a bus by a very simple protocol.
Our I/O zipper concept can be used to implement the concept that the port into a node could be driven by the port out of a node or by data coming from the system bus. Conversely, data being put out of a node would be available to both the input to another node and to the system bus. Note that outputting data to both the system bus and another node is not done simultaneously but in different cycles.
Dotting is used in the H-DOT discussions where two-ported PEs or PMEs or Pickets can be used in arrays of various organizations by taking advantage of dotting. Several topologies are discussed including 2D and 3D Meshes, Base 2 N-cube, Sparse Base 4 N-cube, and Sparse Base 8 N-cube.

### DRAM

DRAM is an acronym for dynamic random access memory, the common storage used by computers for main memory. However, the term DRAM can be applied to use as a cache or as a memory which is not the main memory.

### FLOATING-POINT

A floating-point number is expressed in two parts. There is a fixed point or fraction part, and an exponent part to some assumed radix or Base. The exponent indicates the actual placement of the decimal point. In the typical floating-point representation a real number 0.0001234 is represented as 0.1234-3, where 0.1234 is the fixed-point part and -3 is the exponent. In this example, the floating-point radix or base is 10, where 10 represents the implicit fixed positive integer base, greater than unity, that is raised to the power explicitly denoted by the exponent in the floating-point representation or represented by the characteristic in the floating-point representation and then multiplied by the fixed-point part to determine the real number represented. Numeric literals can be expressed in floating-point notation as well as real numbers.

### FLOPS

This terms refers to floating-point instructions per second. Floating-point operations include ADD, SUB, MPY, DIV and often many others. Floating-point instructions per second parameter is often calculated using the add or multiply instructions and, in general, may be considered to have a 50/50 mix. An operation includes the generation of exponent, fraction and any required fraction normalization. We could address 32 or 48-bit floating-point formats (or longer but we have not counted them in the mix.) A floating-point operation when implemented with fixed point instructions (normal or RISC) requires multiple instructions. Some use a 10 to 1 ratio in figuring performance while some specific studies have shown a ratio of 6.25 more appropriate to use. Various architectures will have different ratios.

### Functional unit

A functional unit is an entity of hardware, software, or both, capable of accomplishing a purpose.

### Gbytes

Gbytes refers to a billion bytes. Gbytes/s would be a billion bytes per second.

### GIGAFLOPS

(10)**9 floating-point instructions per second.

### GOPS and PETAOPS

GOPS or BOPS, have the same meaning - billions of operations per second. PETAOPS means trillions of operations per second, a potential of the current machine. For our APAP machine they are just about the same as BIPs/GIPs meaning billions of instructions per second. In some machines an instruction can cause two or more operations (ie. both an add and multiply) but we don't do that. Alternatively it could take many instructions to do an op. For example we use multiple instructions to perform 64 bit arithmetic. In counting ops however, we did not elect to count log ops. GOPS may be the preferred use to describe performance, but there is no consistency in usage that has been noted. One sees MIPs/MOPs then BIPs/BOPs and MegaFLOPS/GigaFLOPS/TeraFLOPS/PetaFlops.

### ISA

ISA means the Instruction Set Architecture.

### Link

A link is an element which may be physical or logical. A physical link is the physical connection for joining elements or units, while in computer programming a link is an instruction or address that passes control and parameters between separate portions of the program. In multisystems a link is the connection between two systems which may be specified by program code identifying the link which may be identified by a real or virtual address. Thus generally a link includes the physical medium, any protocol, and associated devices and programming; it is both logical and physical.

### MFLOPS

MFLOPS means (10)**6 floating-point instructions per second.

### MIMD

MIMD is used to refer to a processor array architecture wherein each processor in the array has its own instruction stream, thus Multiple Instruction stream, to execute Multiple Data streams located one per processing element.

### Module

A module is a program unit that is discrete and identifiable or a functional unit of hardware designed for use with other components. Also, a collection of PEs contained in a single electronic chip is called a module.

### Node

Generally, a node is the junction of links. In a generic array of PEs, one PE can be a node. A node can also contain a collection of PEs called a module. In accordance with our invention a node is formed of an array of PMEs, and we refer to the set of PMEs as a node. Preferably a node is 8 PMEs.

### Node array

A collection of modules made up of PMEs is sometimes referred to as a node array, is an array of nodes made up of modules. A node array is usually more than a few PMEs, but the term encompasses a plurality.

### PDE

A PDE is a partial differential equation.

### PDE relaxation solution process

PDE relaxation solution process is a way to solve a PDE (partial differential equation). Solving PDEs uses most of the super computing compute power in the known universe and can therefore be a good example of the relaxation process. There are many ways to solve the PDE equation and more than one of the numerical methods includes the relaxation process. For example, if a PDE is solved by finite element methods relaxation consumes the bulk of the computing time. Consider an example from the world of heat transfer. Given hot gas inside a chimney and a cold wind outside, how will the temperature gradient within the chimney bricks develop? By considering the bricks as tiny segments and writing an equation that says how heat flows between segments as a function of temperature differences then the heat transfer PDE has been converted into a finite element problem. If we then say all elements except those on the inside and outside are at room temperature while the boundary segments are at the hot gas and cold wind temperature, we have set up the problem to begin relaxation. The computer program then models time by updating the temperature variable in each segment based upon the amount of heat that flows into or out of the segment. It takes many cycles of processing all the segments in the model before the set of temperature variables across the chimney relaxes to represent actual temperature distribution that would occur in the physical chimney. If the objective was to model gas cooling in the chimney then the elements would have to extend to gas equations, and the boundary conditions on the inside would be linked to another finite element model, and the process continues. Note that the heat flow is dependent upon the temperature difference between the segment and its neighbors. It thus uses the inter-PE communication paths to distribute the temperature variables. It is this near neighbor communication pattern or characteristic that makes PDE relation very applicable to parallel computing.

### PICKET

This is the element in an array of elements making up an array processor. It consists of: data flow (ALU REGS), memory, control, and the portion of the communication matrix associated with the element. The unit refers to a 1/nth of an array processor made up of parallel processor and memory elements with their control and portion of the array intercommunication mechanism. A picket is a form of processor memory element or PME. Our PME chip design processor logic can implement the picket logic described in related applications or have the logic for the array of processors formed as a node. The term PICKET is similar to the commonly used array term PE for processing element, and is an element of the processing array preferably comprised of a combined processing element and local memory for processing bit parallel bytes of information in a clock cycle. The preferred embodiment consisting of a byte wide data flow processor, 32k bytes or more of memory, primitive controls and ties to communications with other pickets.
The term "picket" comes from Tom Sawyer and his white fence, although it will also be understood functionally that a military picket line analogy fits quite well.

### Picket Chip

A picket chip contains a plurality of pickets on a single silicon chip.

### Picket Processor system (or Subsystem)

A picket processor is a total system consisting of an array of pickets, a communication network, an I/O system, and a SIMD controller consisting of a microprocessor, a canned routine processor, and a micro-controller that runs the array.

### Picket Architecture

The Picket Architecture is the preferred embodiment for the SIMD architecture with features that accommodate several diverse kinds of problems including:
- set associative processing
- parallel numerically intensive processing
- physical array processing similar to images

### Picket Array

A picket array is a collection of pickets arranged in a geometric order, a regular array.

### PME or processor memory element

PME is used for a processor memory element. We use the term PME to refer to a single processor, memory and I/O capable system element or unit that forms one of our parallel array processors. A processor memory element is a term which encompasses a picket. A processor memory element is 1/nth of a processor array which comprises a processor, its associated memory, control interface, and a portion of an array communication network mechanism. This element can have a processor memory element with a connectivity of a regular array, as in a picket processor, or as part of a subarray, as in the multi-processor memory element node we have described.

### Routing

Routing is the assignment of a physical path by which a message will reach its destination. Routing assignments have a source or origin and a destination. These elements or addresses have a temporary relationship or affinity. Often, message routing is based upon a key which is obtained by reference to a table of assignments. In a network, a destination is any station or network addressable unit addressed as the destination of information transmitted by a path control address that identifies the link. The destination field identifies the destination with a message header destination code.

### SIMD

A processor array architecture wherein all processors in the array are commanded from a Single Instruction stream to execute Multiple Data streams located one per processing element.

### SIMDMIMD or SIMD/MIMD

SIMDMIMD or SIMD/MIMD is a term referring to a machine that has a dual function that can switch from MIMD to SIMD for a period of time to handle some complex instruction, and thus has two modes. The Thinking Machines, Inc. Connection Machine model CM-2 when placed as a front end or back end of a MIMD machine permitted programmers to operate different modes for execution of different parts of a problem, referred to sometimes a dual modes. These machines have existed since Illiac and have employed a bus that interconnects the master CPU with other processors. The master control processor would have the capability of interrupting the processing of other CPUs. The other CPUs could run independent program code. During an interruption, some provision must be made for checkpointing (closing and saving current status of the controlled processors).

### SIMIMD

SIMIMD is a processor array architecture wherein all processors in the array are commanded from a Single Instruction stream, to execute Multiple Data streams located one per processing element. Within this construct, data dependent operations within each picket that mimic instruction execution are controlled by the SIMD instruction stream.
This is a Single Instruction Stream machine with the ability to sequence Multiple Instruction streams (one per Picket) using the SIMD instruction stream and operate on Multiple Data Streams (one per Picket). SIMIMD can be executed by a processor memory element system.

### SISD

SISD is an acronym for Single Instruction Single Data.

### Swapping

Swapping interchanges the data content of a storage area with that of another area of storage.

### Synchronous Operation

Synchronous operation in a MIMD machine is a mode of operation in which each action is related to an event (usually a clock); it can be a specified event that occurs regularly in a program sequence. An operation is dispatched to a number of PEs who then go off to independently perform the function. Control is not returned to the controller until the operation is completed.
If the request is to an array of functional units, the request is generated by a controller to elements in the array which must complete their operation before control is returned to the controller.

### TERAFLOPS

TERAFLOPS means (10)**12 floating-point instructions per second.

### VLSI

VLSI is an acronym for very large scale integration (as applied to integrated circuits).

### Zipper

A zipper is a new function provided. It allows for links to be made from devices which are external to the normal interconnection of an array configuration.

## Claims

1. An array processor for performing
SIMD functions, comprising a data processing system having an array controller, a plurality of array processing elements, and an interconnection path for interprocessing element communication, each of said array processing elements having a parallel communication register for interprocessor communication allowing for multiple processing element communication in a single communication cycle.

2. An array processor according to Claim 1,
wherein a processing element is a picket comprising elements for multibyte-wide parallel data flow, a parallel memory, and a parallel communication register functioning as a slide register.

3. An array processor according to Claim 1,
wherein a processing element communication register can be made transparent such that data will pass through any intervening transparent pickets to the first one in the path that is not transparent.

4. An array processor according to Claim 2,
wherein a processing element communication register can be made transparent under control of the array controller or by control signals within a picket, such that a picket in SIMD mode can decide if it participates in a specific data transfer locally.

5. An array processor according to Claim 3,
wherein a processing element communication register can be made a transparent communication register providing a system bypass for a faulty picket in a slide path for system fault tolerance.

6. An array processor according to Claim 3,
wherein a processing element communication register can be made to bypass a good but unassigned picket in a slide path for addition and deletion of pickets to or from an active processing array.

7. An array processor according to Claim 3,
wherein a processing element communication register can enter a transparent mode in which an intermediate picket which is not in a communication operation lies between two pickets which have a need for communicated data, the intermediate picket which is not a participant in a communication operation passes information to its destination in a transparent mode, such that information that is placed on a slide bus by a sending picket would flow through the intermediate picket and be immediately available to be clocked into the destination picket.

8. An array processor according to Claim 7,
wherein the transparent mode can be applied to several successive pickets permitting slides over several pickets in one clock cycle.

9. An array processor according to Claim 7,
wherein the transparent mode can be applied to a slide bus for transparent moves when the array controller has not activated the picket and loaded it with data, or if the picket has been disabled, or is in doze mode.

10. An array processor according to Claim 1,
wherein the array controller can:
SLIDE LEFT to cause all active pickets to transfer data to the picket on the immediate left and accept data from the picket on the immediate right;
SLIDE RIGHT to cause all active pickets to transfer data to the picket on the immediate right and accept data from the picket on the immediate left; and cause or permit a picket to
BROADCAST on the communication path functioning as a slide bus by commanding processing elements to be transparent, capturing the information in interested pickets.

11. An array processor according to Claim 10,
wherein
MULTI-PICKET MOVES can be performed on the slide bus by identifying the source picket and the destination picket and then causing all of the intervening segment of pickets to go transparent.

12. An array processor according to Claim 10,
wherein a slide bus can bypass faulty pickets by simply making a slide latch of an inactive or faulty picket transparent such that data will pass it to the next active picket.

13. An array processor according to Claim 10,
wherein a control slide function is provided for controlling activities during clock time of transfer between processing elements, said control slide function including:
Receive from the left bus; Receive from the right bus; Clock the latch (save the data); and Activate transparent mode.

14. An array processor according to Claim 13,
wherein the control function is combined into two controls within a picket and one of which indicates the direction of the transfer and comes from the array controller and is not modified by the picket for controlling transfers during one cycle in the same direction, and a second control function which indicates that the picket latches the data, or passes it on is tied to a picket DOZE indicator in such a way that when the picket is active, the a slide register captures the data, and when it is not active it passes the data on.

15. An array processor according to Claim 1,
wherein the array processor can move data between a slide latch and a picket memory which takes place in the clock cycle before or after the picket to picket communication cycle.

16. An array processor according to Claim 2,
wherein the array processor can identify a logical picket address that identifies active pickets and which are stored in each picket memory at a specific memory address, which logical addresses are adjusted each time a picket is added to or subtracted from the array.

17. An array processor according to Claim 2,
wherein the array processor can remove a picket from the middle of an array by changing the logical address of a pickets with larger picket addresses by:
turning off all pickets with logical addresses less than the one being removed, using one command, and causing all other pickets to pass their logical address to the next higher one with two commands, and by providing that application dependent data movement takes place if data must be linked to a logical address, and causing the controller to disable a picket being removed using its physical address.
